# EUROPEAN PATENT SPECIFICATION

(11) **EP 1 876 936 B1**
(45) Date of publication and mention of the grant of the patent: **19.11.2008**
(21) Application number: 06744703.7
(22) Date of filing: 15.05.2006
(51) Int. Cl.: A47J 47/01, A47J 47/06

(54) **AIRTIGHT COFFEE DISPENSER FOR COFFEE MACHINE**
LUFTDICHTE KAFFEEABGABEVORRICHTUNG FÜR KAFFEEMASCHINE
DISTRIBUTEUR DE CAFE ETANCHE POUR MACHINE A CAFE

(30) Priority: 13.05.2005 IT MI20050876
(43) Date of publication of application: 16.01.2008
(73) Proprietor: Petervin S.A., L-1233 Luxembourg (LU)
(72) Inventor: ILLY, Francesco, CH-6043 Meggen (CH)
(74) Representative: Concone, Emanuele
(86) International application number: PCT/IB2006/001264
(87) International publication number: WO 2006/120561

(56) References cited:
- WO-A-20/05019055
- DE-U1- 20 115 968
- US-A- 3 682 356
- US-A- 5 934 506
- PATENT ABSTRACTS OF JAPAN vol. 1997, no. 05, 30 May 1997 (1997-05-30) & JP 09 012099 A (MATSUSHITA ELECTRIC IND CO LTD), 14 January 1997 (1997-01-14)

## Description

The present invention relates to coffee machines both for domestic and professional use, and in particular to an airtight coffee dispenser applicable to any known coffee machine.

It is known that coffee is sold in airtight packages to protect it from contact with air that would cause a quick deterioration. The deterioration of the qualities of the coffee in contact with air is due mainly to two factors:
a) the very fast absorption of the moisture contained in the surrounding air that implies the opening of the pores of the coffee cells and the subsequent escape of the gases contained therein, among which the flavours. This phenomenon causes a flattening of the olfactory spectrum of the drink for lack of these gases lost to the atmosphere, and in the case of ground coffee this occurs at a much faster rate with respect to coffee in beans exactly due to the greater number of intercellular walls directly exposed to the surrounding atmosphere;
b) the oxidation process of the fats contained in the coffee cell, due to the fact that since coffee contains powerful anti-oxidants it binds the oxygen present in the surrounding atmosphere at a very fast rate; this oxygen being nothing else than the oxygen contained in the air that replaced the gases contained in the cell due the phenomenon of stabilization of the osmotic pressure between the two atmospheres, outside and inside the cell. However, the continuous absorption of the present oxygen changes the composition of the air contained in the cell and triggers a mechanism of constant re-building of the osmotic pressure which in turn will tend to stabilization by drawing in new air rich in oxygen that in turn will be absorbed, generating a cycle that will stop only when the coffee will stop absorbing oxygen, namely only upon complete oxidation of all the anti-oxidants, oils included, that results in the complete rancidity thereof.

These two phenomena that cause the organoleptic deterioration of roasted coffee are the main reason why the manufacturers of automatic coffee machines chose to operate mainly with coffee in beans, so as to slow down the deterioration in the hope of keeping it below the taste threshold of their customers. In fact, once the coffee has been removed from its airtight package to be loaded in the dispenser of a coffee machine it is exposed to the aggression by the air, and the above-mentioned phenomena remain one of the great drawbacks of the automatic machines because they too often involve a poor quality of the drink.

Another drawback caused by the moisture absorbed by the coffee is the change in the coffee consistence, that makes difficult grinding the coffee in beans and dispensing the ground coffee. In fact, if the coffee machine includes a grinder set to grind the coffee in the dry state that the coffee has when just loaded in the machine, said setting is inadequate when the coffee is ground in a state of greater moisture after having been stored for some time in the dispenser.

Also the factory-ground coffee is affected by moisture, since it tends to form a compact and/or lumpy mass that makes difficult to dispense the precise amount of coffee required for each extraction cycle.

Moreover, a further drawback occurs during the storage of the coffee in the dispenser. Defining "head space" the empty space filled only by gases and not by coffee, namely the sum of all the interstices in the coffee mass plus the dispenser volume not occupied by coffee, it is clear that said head space increases as the coffee is progressively used. When the head space reaches a certain threshold, the coffee changes in flavour even if the atmosphere inside the dispenser is inert, and therefore protective.

This happens because many of the flavours contained in the cells are in the gaseous state at room temperature and therefore tend, due to the osmotic pressure, to balance their concentration inside and outside the cells. This decrease in flavour concentration inside the cells can reach such values that at the time of preparing the drink these flavours result below the taste threshold of a human being, that is to say that they no longer are present. Furthermore, their absence is replaced by other flavours having a higher boiling point that in such a case result excessive and unpleasant upon tasting, whereas they would have remained below the taste threshold where this dilution phenomenon of the lighter flavours had not occurred.

For these and other reasons, the market is turning more and more towards monodose portion systems, which however imply a much higher cost of the coffee package both from the economical and environmental point of view. As a matter of fact, it is clear that the economic cost of packaging coffee in monodose portions is immensely greater than that of ground coffee or coffee in beans, and also the environmental impact of such a system is at least six times higher than the conventional one. Document DE-20115968 discloses a coffee powder dispenser.

Therefore the object of the present invention is to provide a coffee dispenser which overcomes the above-mentioned drawbacks.

This object is achieved by means of an airtight coffee dispenser provided with means suitable to push the coffee out of the dispenser while reducing the storage volume. For a greater effectiveness, the dispenser can also include a vacuum circuit and/or a circuit for supplying inert gas.

The main advantage of the present coffee dispenser is exactly that of allowing an optimal storage of the coffee in the coffee machine, even for a long time and regardless of the frequency of usage of the machine.

A further advantage of this coffee dispenser comes from the fact that it has a simple, cheap and reliable structure that allows it to be easily applied to any kind of coffee machine.

These and other advantages and characteristics of the coffee dispenser according to the present invention will be clear to those skilled in the art from the following detailed description of some embodiments thereof, with reference to the annexed drawings wherein:
Fig.1 is a diagrammatic partially sectional view showing a first embodiment of the coffee dispenser, complete with a vacuum/inert gas circuit;
Fig.2 is a diagrammatic partial view showing a second embodiment of the coffee dispenser; and
Fig.3 is a diagrammatic partial view showing a third embodiment of the coffee dispenser.

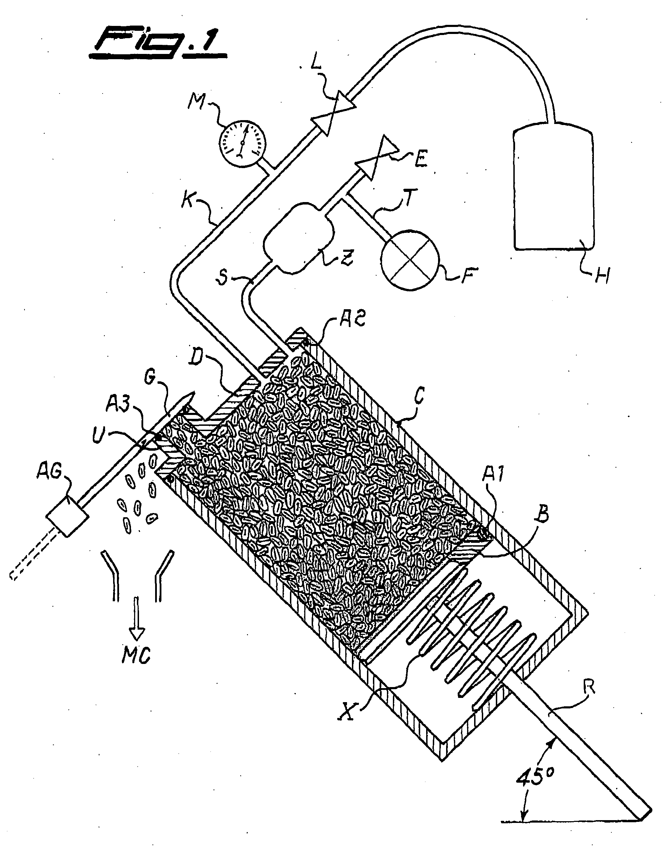

With reference to fig.1, there is seen that a coffee dispenser according to the present invention, suitable for both coffee in beans and ground coffee, includes a storage container C arranged in an inclined position, e.g. inclined at 45°, closed at the top by a lid D and at the bottom by a piston B that rises as the coffee used by the machine increases and the coffee contained in the container decreases. This piston B is guided in its movement by a relevant rod R and can be driven by a spring X, by a worm screw or by any other type of mechanic, hydraulic or pneumatic actuator.

The coffee dispensing system provides a nozzle U preferably located at the lowest portion of lid D, and a closure system with a sliding shutter G, or another type of airtight closure, driven by an electromagnet AG or by any other type of mechanic, hydraulic or pneumatic actuator.

At the moment of a request of coffee by the machine, shutter G is retracted by actuator AG and the system for reducing the volume of container C, through the movement of piston B, pushes the coffee through nozzle U beyond shutter G for a time determined by the machine that corresponds to the required amount of coffee. Coffee proceeds then from nozzle U to the grinder or to the extraction chamber by gravity (arrow MC). Once the coffee is finished, piston B returns to the bottom of container C so as to make room for a new load of fresh coffee.

The airtightness of container C is assured by suitable gaskets, such as a first O-ring A1 between piston B and the internal walls of container C, a second gasket A2 between lid D and the top of container C, and a third gasket A3 between shutter G and the top of nozzle U. In this way, in the long periods when coffee waits to be requested by the machine the air containing oxygen and moisture can not penetrate container C, where it is drawn by the strong osmotic pressure due to the difference between the almost complete absence of moisture inside the container (coffee roasted at 220°C is practically void of water molecules) and the surrounding air whose moisture content can range from 20% to 100%.

The freshly roasted coffee has an average CO₂ content of 19 liters per kg, said gas being the main component of the gas mixture that formed inside the cell during the roasting process, while most of the other gases are low-boiling flavours. This abundant gas may be used to keep the atmosphere inside container C free from oxygen and moisture.

It should be noted that ground coffee contains less CO₂ with respect to coffee in beans because a large portion of the cells was broken during grinding and lost at that moment the capability of containing gas, therefore the only residual gas is the gas contained in the cells still intact. On the other hand, the interstices between the granules of ground coffee are much smaller than those existing between the beans, thus producing an empty/filled ratio more favourable to coffee, i.e. a smaller "head space" as defined above. Therefore, in order to keep a ground coffee, even better if pressed, in an inert atmosphere a much smaller volume of CO₂ will be required for the same weight of coffee. The amount of gas remaining in the intact cells is sufficient to carry out exactly the same function as in the coffee in beans exactly because this proportion between available gas and volume of the interstices to be filled remains almost unchanged.

Since CO₂ is quite heavier than air, in static conditions it tends to stratify and to have air float in a layer on top of it. Therefore, in order to retain the CO₂ inside container C, dispensing of the coffee takes place upward, contrary to conventional systems that operate by fall. It should be noted that the 45° angle indicated in fig.1 is just an example, since container C can take any angle between 10° and 90° according to specific manufacturing needs. Clearly, the smaller the angle the greater the amount of CO₂ that is lost at each dispensing of the coffee.

In practice, coffee releases over time the CO₂ contained in the cells and the latter creates a bed inside which coffee is protected, pushing upward the air that remained in the interstices upon loading of container C. Lid D is preferably connected through a pipe S to a one-way blow-off valve E set at about 0,1 bar, for the possible excess pressure that might build up inside container C due to the degassing process of the coffee. It is preferable to arrange the socket of pipe S in the top portion of lid D, so that the first gas mixture to be expelled will be the residual air from the loading since it floats over the CO₂.

In order to reduce as much as possible the time when the coffee is in contact with the residual air that entered the container, both during the fresh coffee loading operation and at each coffee output toward the machine, a suitable chamber Z is preferably arranged before the blow-off valve E to form a gas cushion between the coffee surface and the blow-off valve E. As the CO₂ released by the coffee increases, this cushion, initially made up of air, will be replaced by CO₂.

From the description above it is also clear that the "head space" does not increase over time, since at each coffee output the volume of container C is reduced so that the coffee takes up all the available space.

For a further enhancement in the coffee storage performance, the embodiment illustrated in fig.1 also provides the use of a vacuum and/or inert gas circuit. It should be noted, however, that even in the simplest embodiment, with container C being airtight and variable in volume, the present dispenser assures a significant improvement over conventional dispensers.

In order to remove as much as possible the residual air from the loading, there may be provided a vacuum pump F, preferably connected to pipe S through a connector T that enters between chamber Z and valve E. The activation of pump F creates a vacuum in container C, and this accelerates the degassing process from the coffee cells thus restoring in a short time the inert atmosphere of the package in which the coffee was until the moment it was loaded.

Wishing to further accelerate this restoring process of an atmosphere suitable for the coffee storage, instead of or in combination with the activation of the vacuum pump F it is possible to introduce in container C some CO₂ or other inert gas coming from a tank H connected to the container lid D through a pipe K and a valve L. Such an inert gas supply system may be manual, in that it is sufficient to close valve L when the blow-off valve E starts to bleed, or automatic through an electrovalve controlled by a pressure controller M.

In the models provided with tank H for CO₂ or other inert gas with automatic control, the atmosphere restoring cycle will be activated at each coffee output by the machine, thus assuring the absolute absence of oxygen and moisture.

It should be noted that the sockets of pipes S and K are not necessarily located on lid D, the important thing being that the socket of pipe S is arranged at a position as high as possible, whereas the socket of pipe K must be arranged at a position higher than the top dead center of the travel of piston B.

It should also be noted that instead of tank H it is possible to provide a system for generating CO₂ made up of a chamber in which the coffee machine pump introduces a small amount of water that making contact with bicarbonate and citric acid present in the chamber makes them react and generate a large amount of CO₂. An electrovalve could adjust the amount of water to be introduced in the chamber and a pressure regulator could control the amount and pressure of the CO₂ to be supplied to the coffee container C.

At each coffee output, in order not to uselessly discharge the CO₂ generated in container C, valve L cuts the flow of CO₂ from the generation chamber or from tank H to the container, and then restores it after shutter G has been closed.

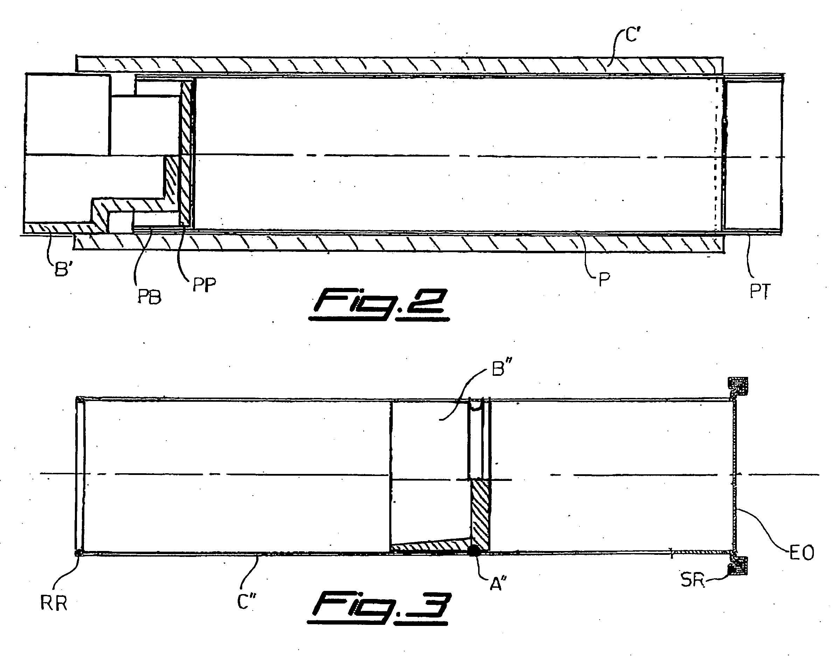

A second embodiment is schematically illustrated in fig.2, that shows a piston B' airtightly sliding inside a container C' in which the coffee is not poured directly into contact with the internal walls of container C'. In fact, the coffee is contained in a secondary flexible container P, typically of multi-laminated material (PET+PE+Al), that has a removable top portion PT and a bottom PB with a rigid disk PP, preferably located outside the volume occupied by the coffee.

In practice, the secondary container P acts also as a transport and sale package for the coffee and can be introduced with a minimum play into container C' since it is obviously sized for such an operation. In this way, it is sufficient to remove the top PT of package P and close lid D (not illustrated) to achieve a condition similar to that of fig.1 yet with the difference that piston B' and container C' are not in direct contact with the coffee.

As a consequence, prior to re-loading the dispenser there is no need to clean the coffee storage container from possible remains, that may go rancid over time, and the tightness between piston and container is improved since piston B' slides over a clean surface.

It should be noted that the portion of piston B' in contact with disk PP has a reduced diameter with respect to the latter in order to obtain a space suitable to receive the flexible material of the secondary container P that gets crushed as piston B' moves forward along container C'. Obviously, when the coffee contained in the secondary container P is finished, the latter will be completely crushed and therefore will be eliminated and replaced by a new secondary container P.

A third embodiment is schematically illustrated in fig.3, that shows a piston B" airtightly sliding, by means of a suitable gasket A", inside a rigid container C" in which the coffee is put at the factory (e.g. a tin can with walls 0,3 mm thick). Container C" acts also in this case as a transport and sale package for the coffee, and it further includes piston B" that on the surface in direct contact with the coffee is preferably coated with a layer of oxygen barrier material, such as aluminium or the like.

Piston B" is retained inside container C" by a folded over rim RR formed at the bottom end of the latter. At the top end of container C" there is provided an easy-open lid EO (e.g. with a pull tab), as well as a sealing rim SR formed by folding over together the top edge of container C" and lid EO.

In practice, the dispenser container is a removable and replaceable container that is coupled to the dispenser structure through the sealing rim SR designed to engage a corresponding dispenser lid (not illustrated). Furthermore, since piston B" is integral with the removable container C" it is possible to dispense with the dispenser piston and provide the actuator only, for example in the form of the rod R driven by any known mechanism. Obviously, it would be possible to drive piston B" also through a suitable dispenser piston such as piston B' of fig.2.

In this third embodiment not only there is no need to clean the coffee storage container from possible remains, but the removable container C" can be shaped so as to be coupled exclusively with its relevant dispenser thus creating a so-called "closed system".

Moreover, container C" may include means (not illustrated) for locking piston B" at the end of the travel thereof, namely at the upper end of the container, so that piston B" can not be returned to the bottom end and container C" can not be re-used for another load of coffee but has to be replaced.

It is clear that the above-described and illustrated embodiments of the dispenser according to the invention are just examples susceptible of various modifications. In particular, the exact shape, size and arrangement of the elements can be freely changed according to specific manufacturing needs, as long as the capacity of storing the coffee in an atmosphere that prevents the deterioration thereof is retained. Furthermore, it is obvious that, although the description above refers to a coffee dispenser, the present dispenser can be used for storing and dispensing any other product that has deterioration problems similar to those of coffee.

## Claims

1. Dispenser including a rigid container (C; C'; C") provided with a lid (D) and an outlet nozzle (U) closed by shutter means (G), **characterized in that** said container (C; C'; C") is airtight and arranged at an angle between 10° and 90° upward with respect to the horizontal with said outlet nozzle (U) on top of the container, and **in that** it includes means suitable to dispense from the container (C; C'; C") the product stored therein while reducing the storage volume.

2. Dispenser according to claim 1, **characterized in that** the product dispensing means consist of at least one piston (B; B'; B") airtightly sliding within the container (C; C'; C") and driven by a mechanic, pneumatic or hydraulic actuator.

3. Dispenser according to claim 1 or 2, **characterized in that** the outlet nozzle (U) is located at the lowest portion of the lid (D).

4. Dispenser according to one of the preceding claims, **characterized in that** the lid (D) is connected through a pipe (S) to a one-way blow-off valve (E).

5. Dispenser according to claim 4, **characterized in that** the socket of the pipe (S) is located in the top portion of the lid (D).

6. Dispenser according to claim 4 or 5, **characterized in that** it further includes a vacuum pump (F) connected to the pipe (S) through a connector (T) that enters between a chamber (Z) and the blow-off valve (E).

7. Dispenser according to one of the preceding claims, **characterized in that** it further includes an inert gas source connected to the lid (D) through a pipe (K) and a valve (L).

8. Dispenser according to claim 7, **characterized in that** the valve (L) is an electrovalve controlled by a pressure controller (M).

9. Dispenser according to claim 7 or 8, **characterized in that** the inert gas source is a tank (H).

10. Dispenser according to claim 7 or 8, **characterized in that** the inert gas source is a system for generating CO₂ made up of a chamber in which a small amount of water is introduced to make contact with bicarbonate and citric acid.

11. Dispenser according to one of claims 7 to 10, **characterized in that** at the time of the product output the valve (L) cuts the flow of inert gas from the inert gas source to the container (C; C'; C").

12. Dispenser according to one of the preceding claims, **characterized in that** it further includes a flexible and removable secondary container (P) sized to be introduced with a minimum play into the container (C'), said secondary container (P) being provided with a removable top portion (PT) and with a bottom (PB) having a rigid disk (PP), the piston (B') having a reduced diameter at the portion in contact with the secondary container (P) so as to obtain a space suitable to receive the flexible material of the secondary container (P) that gets crushed as the piston (B') moves forward along the container (C').

13. Dispenser according to claim 12, **characterized in that** the rigid disk (PP) is arranged outside the volume occupied by the product.

14. Dispenser according to one of claims 1 to 11, **characterized in that** the container (C") is removable and the piston (B") is integral therewith.

15. Dispenser according to claim 14, **characterized in that** the piston (B") is retained inside the container (C") by a folded over rim (RR) formed at the bottom end of the latter.

16. Dispenser according to claim 14 or 15, **characterized in that** at the top end of the container (C") there is provided an easy-open lid (EO) as well as a sealing rim (SR) formed by folding over together the top edge of the container (C") and of said lid (EO).

17. Dispenser according to one of claims 14 to 16, **characterized in that** the piston (B") is coated with an oxygen barrier material on the surface in contact with the product.

18. Dispenser according to one of claims 14 to 17, **characterized in that** the container (C") includes means suitable to lock at its upper end the piston (B") when the latter reaches the end of its travel.

19. Dispenser according to one of the preceding claims, **characterized in that** the shutter means (G) consist of a sliding shutter.

20. Dispenser according to one of the preceding claims, **characterized in that** the shutter means (G) are driven by an electromagnetic actuator (AG).

21. Coffee machine **characterized in that** it includes a coffee dispenser according to one of the preceding claims.

## Patentansprüche

1. Entnahmevorrichtung, die einen formfesten Behälter (C; C'; C") aufweist, der mit einem Deckel (D) und einem Auslassstutzen (U) versehen ist, der durch Verschlussmittel (G) verschlossen ist, **dadurch gekennzeichnet, dass** der Behälter (C; C'; C") luftdicht ist und in einem Winkel zwischen 10°und 90°nach oben in Bezug auf die Horizontale mit dem Auslassstutzen (U) oben auf dem Behälter angeordnet ist, und dass er Mittel aufweist, die geeignet sind, das Erzeugnis, dass in dem Behälter (C; C'; C") gelagert ist, daraus zu entnehmen, wodurch das Lagervolumen verringert wird.

2. Entnahmevorrichtung nach Anspruch 1, **dadurch gekennzeichnet, dass** das Mittel zur Entnahme des Erzeugnisses aus mindestens einem Kolben (B; B'; B") besteht, der luftdicht innerhalb des Behälters (C; C'; C") gleitet und von einem mechanischen, pneumatischen oder hydraulischen Stellglied gesteuert wird.

3. Entnahmevorrichtung nach Anspruch 1 oder 2, **dadurch gekennzeichnet, dass** der Auslassstutzen (U) sich am niedrigsten Abschnitt des Deckels (D) befindet.

4. Entnahmevorrichtung nach einem der vorhergehenden Ansprüche, **dadurch gekennzeichnet, dass** der Deckel (D) über eine Leitung (S) mit einem Einweg-Abblasventil (E) verbunden ist.

5. Entnahmevorrichtung nach Anspruch 4, **dadurch gekennzeichnet, dass** der Stutzen der Leitung (S) sich im oberen Abschnitt des Deckels (D) befindet.

6. Entnahmevorrichtung nach Anspruch 4 oder 5, **dadurch gekennzeichnet, dass** sie ferner eine Vakuumpumpe (F) aufweist, die über ein Verbindungsglied (T), das zwischen einer Kammer (Z) und dem Abblasventil (E) eintritt, mit der Leitung (S) verbunden ist.

7. Entnahmevorrichtung nach einem der vorhergehenden Ansprüche, **dadurch gekennzeichnet, dass** sie ferner eine Inertgasquelle aufweist, die über eine Leitung (K) und ein Ventil (L) mit dem Deckel (D) verbunden ist.

8. Entnahmevorrichtung nach Anspruch 7, **dadurch gekennzeichnet, dass** das Ventil (L) ein Elektroventil ist, das von einem Druckregler (M) gesteuert wird.

9. Entnahmevorrichtung nach Anspruch 7 oder 8, **dadurch gekennzeichnet, dass** die Inertgasquelle ein Tank (H) ist.

10. Entnahmevorrichtung nach Anspruch 7 oder 8, **dadurch gekennzeichnet, dass** die Inertgasquelle ein System zum Erzeugen on CO₂ ist, das aus einer Kammer besteht, in die eine kleine Menge Wasser eingeleitet wird, um Kontakt mit Bikarbonat und Zitronensäure herzustellen.

11. Entnahmevorrichtung nach einem der Ansprüche 7 bis 10, **dadurch gekennzeichnet, dass** das Ventil (L) zum Zeitpunkt der Abgabe des Erzeugnisses den Zufluss von Inertgas von der Inertgasquelle zum Behälter (C; C'; C") unterbricht.

12. Entnahmevorrichtung nach einem der vorhergehenden Ansprüche, **dadurch gekennzeichnet, dass** sie ferner einen flexiblen und herausnehmbaren sekundären Behälter (P) aufweist, der so bemessen ist, dass er mit einem minimalen Zwischenraum in den Behälter (C') eingesetzt werden kann, wobei der sekundäre Behälter (P) mit einem abnehmbaren oberen Abschnitt (PT) und mit einem Boden (PB) versehen ist, der eine starre Platte (PP) aufweist, wobei der Kolben (B') in dem Abschnitt, der sich in Kontakt mit dem sekundären Behälter (P) befindet, einen geringeren Durchmesser aufweist, um einen Platz zu erhalten, der geeignet ist, das flexible Material des sekundären Behälters (P), der zusammengedrückt wird, wenn der Kolben (B') sich entlang des Behälters (C') nach vorne bewegt, aufzunehmen.

13. Entnahmevorrichtung nach Anspruch 12, **dadurch gekennzeichnet, dass** die starre Platte (PP) außerhalb des von dem Erzeugnis eingenommenen Volumens angeordnet ist.

14. Entnahmevorrichtung nach einem der Ansprüche 1 bis 11, **dadurch gekennzeichnet, dass** der Behälter (C") herausnehmbar ist und der Kolben (B") darin eingebaut ist.

15. Entnahmevorrichtung nach Anspruch 14, **dadurch gekennzeichnet, dass** der Kolben (B") innerhalb des Behälters (C") durch einen umgeklappten Rand (RR) gehalten wird, der am unteren Ende des Letzteren ausgebildet ist.

16. Entnahmevorrichtung nach Anspruch 14 oder 15, **dadurch gekennzeichnet, dass** am obersten Ende des Behälters (C") ein Aufreißdeckel (EO) sowie eine Abdichtkante (SR) gebildet ist, die durch das gemeinsame Umfalten der oberen Kante des Behälters (C") und des Deckels (EO) gebildet ist.

17. Entnahmevorrichtung nach einem der Ansprüche 14 bis 16, **dadurch gekennzeichnet, dass** der Kolben (B") auf der Fläche, die sich in Kontakt mit dem Erzeugnis befindet, mit einem Sauerstoffsperrmaterial beschichtet ist.

18. Entnahmevorrichtung nach einem der Ansprüche 14 bis 17, **dadurch gekennzeichnet, dass** der Behälter (C") Mittel aufweist, die geeignet sind, an seinem oberen Ende den Kolben (B") festzustellen, wenn Letzterer das Ende seines Hubs erreicht.

19. Entnahmevorrichtung nach einem der vorhergehenden Ansprüche, **dadurch gekennzeichnet, dass** die Schließmittel (G) aus einer Schiebeklappe bestehen.

20. Entnahmevorrichtung nach einem der vorhergehenden Ansprüche, **dadurch gekennzeichnet, dass** die Schließmittel (G) von einem elektromagnetischen Stellglied (AG) gesteuert werden.

21. Kaffeemaschine, **dadurch gekennzeichnet, dass** sie eine Kaffeeentnahmevorrichtung nach einem der vorhergehenden Ansprüche aufweist.

## Revendications

1. Distributeur comprenant un conteneur rigide (C ; C' ; C") muni d'un couvercle (D) et d'une buse de distribution (U) fermée par un moyen d'obturation (G), **caractérisé en ce que** ledit conteneur (C ; C' ; C") est étanche à l'air et agencé à un certain angle de 10° à 90° vers le haut par rapport à l'horizontale avec ladite buse de distribution (U) au sommet du conteneur, et **en ce qu'**il comprend un moyen aptes à distribuer à partir du distributeur (C ; C' ; C") le produit stocké à l'intérieur tout en réduisant le volume de stockage.

2. Distributeur selon la revendication 1, **caractérisé en ce que** le moyen de distribution de produit se compose d'au moins un piston (B ; B' ; B") coulissant de manière étanche à l'air dans le conteneur (C ; C' ; C") et entraîné par un actionneur mécanique, pneumatique ou hydraulique.

3. Distributeur selon la revendication 1 ou 2, **caractérisé en ce que** la buse de distribution (U) est située au niveau de la partie la plus inférieure du couvercle (D).

4. Distributeur selon l'une des revendications précédentes, **caractérisé en ce que** le couvercle (D) est relié par le biais d'un tuyau (S) à une soupape d'extraction de non-retour (E).

5. Distributeur selon la revendication 4, **caractérisé en ce que** le manchon du tuyau (S) est situé dans la partie supérieure du couvercle (D).

6. Distributeur selon la revendication 4 ou 5, **caractérisé en ce qu'**il comprend en outre une pompe à vide (F) reliée au tuyau (S) par le biais d'un connecteur (T) qui pénètre entre une chambre (Z) et la soupape d'extraction (E).

7. Distributeur selon l'une des revendications précédentes, **caractérisé en ce qu'**il comprend en outre une source de gaz inerte reliée au couvercle (D) par le biais d'un tuyau (K) et d'une soupape (L).

8. Distributeur selon la revendication 7, **caractérisé en ce que** la soupape (L) est une électrovanne commandée par un régulateur de pression (M).

9. Distributeur selon la revendication 7 ou 8, **caractérisé en ce que** la source de gaz inerte est un réservoir (H).

10. Distributeur selon la revendication 7 ou 8, **caractérisé en ce que** la source de gaz inerte est un système de génération de CO₂ composé d'une chambre dans laquelle une faible quantité d'eau est introduite afin de créer un contact avec du bicarbonate et de l'acide citrique.

11. Distributeur selon l'une des revendications 7 à 10, **caractérisé en ce que,** au moment de la sortie du produit, la soupape (L) interrompt le flux de gaz inerte de la source de gaz inerte vers le conteneur (C ; C' ; C").

12. Distributeur selon l'une des revendications précédentes, **caractérisé en ce qu'**il comprend en outre un conteneur secondaire flexible et amovible (P) dimensionné pour être introduit avec un jeu minimum dans le conteneur (C'), ledit conteneur secondaire (P) étant muni d'une partie supérieure amovible (PT) et d'un fond (PB) ayant un disque rigide (PP), la piston (B') ayant un diamètre réduit au niveau de la partie en contact avec le conteneur secondaire (P) de façon à obtenir un espace apte à recevoir le matériau flexible du conteneur secondaire (P) qui est broyé lorsque le piston (B') se déplace vers l'avant le long du conteneur (C').

13. Distributeur selon la revendication 12, **caractérisé en ce que** le disque rigide (PP) est agencé à l'extérieur du volume occupé par le produit.

14. Distributeur selon l'une des revendications 1 à 11, **caractérisé en ce que** le conteneur (C") est amovible et le piston (B") fait partie intégrante de celui-ci.

15. Distributeur selon la revendication 14, **caractérisé en ce que** le piston (B") est retenu à l'intérieur du conteneur (C") par un bord replié (RR) formé au niveau de l'extrémité inférieure de ce dernier.

16. Distributeur selon la revendication 14 ou 15, **caractérisé en ce que,** au niveau de l'extrémité supérieure du conteneur (C"), est prévu un couvercle à ouverture facile (EO) ainsi qu'un bord d'étanchéité (SR) formé en repliant ensemble le bord supérieur du conteneur (C") et dudit couvercle (EO).

17. Distributeur selon l'une des revendications 14 à 16, **caractérisé en ce que** le piston (B") est recouvert d'un matériau barrière contre l'oxygène sur la surface en contact avec le produit.

18. Distributeur selon l'une des revendications 14 à 17, **caractérisé en ce que** le conteneur (C") comprend un moyen apte à bloquer, au niveau de son extrémité supérieure, le piston (B") lorsque ce dernier atteint la fin de sa course.

19. Distributeur selon l'une des revendications précédentes, **caractérisé en ce que** le moyen d'obturation (G) se compose d'un obturateur coulissant.

20. Distributeur selon l'une des revendications précédentes, **caractérisé en ce que** le moyen d'obturation (G) est entraîné par un actionneur électromagnétique (AG).

21. Machine à café, **caractérisée en ce qu'**elle comprend un distributeur de café selon l'une des revendications précédentes.
